# EUROPEAN PATENT SPECIFICATION

(11) **EP 1 883 577 B1**
(45) Date of publication and mention of the grant of the patent: **27.01.2010**
(21) Application number: 06742989.4
(22) Date of filing: 19.05.2006
(51) Int. Cl.: B64C 23/06

(54) **CONCEPT OF A VARIABLE WINGLET FOR LATERAL LOAD REDUCTION FOR COMBINED LATERAL AND VERTICAL LOAD REDUCTION, AND FOR IMPROVING THE PERFORMANCE OF MEANS OF LOCOMOTION**
KONZEPT FÜR EIN VARIABLES WINGLET ZUR SEITENLASTVERRINGERUNG FÜR DIE KOMBINIERTE SEITEN- UND VERTIKALLASTVERRINGERUNG UND ZUR LEISTUNGSSTEIGERUNG DURCH FORTBEWEGUNG
CONCEPT DE BOUT D'AILE VARIABLE SERVANT A REDUIRE UNE CHARGE LATERALE, A REDUIRE UNE CHARGE LATERALE ET UNE CHARGE VERTICALE COMBINEES, ET A AMELIORER LA PERFORMANCE D'UN MOYEN DE LOCOMOTION

(30) Priority: 19.05.2005 DE 102005023117; 19.05.2005 US 682736 P; 21.06.2005 DE 102005028688
(43) Date of publication of application: 06.02.2008
(73) Proprietor: Airbus Deutschland GmbH, 21129 Hamburg (DE)
(72) Inventor: WEHRTMANN, Vitalij, 21077 Hamburg (DE); KORDT, Michael, 22587 Hamburg (DE)
(74) Representative: Kopf, Korbinian Paul
(86) International application number: PCT/EP2006/004774
(87) International publication number: WO 2006/122826

(56) References cited:
- EP-A- 1 531 126
- DE-A1- 10 313 290
- GB-A- 2 282 996
- US-A- 4 455 004
- US-A- 4 457 479
- US-A- 4 722 499
- US-A1- 2004 000 619

## Description

### Reference to related applications

This application claims the benefit of the filing date of United States Provisional application No 60/682,736 filed 19 May 2005, of German patent application 10 2005 023 117.9 filed 19 May 2005, and of German patent application 10 2005 028 688.7 filed 21 June 2005.

### Field of the invention

The present invention relates to a device and a method for adapting aerodynamic characteristics of an aerodynamically effective construction element or a wing element, to an aircraft and to the use of a device for adapting aerodynamic characteristics of a wing element in an aircraft.

### Technological background

In modem commercial aircraft, more and more frequently winglets are used, whose purpose it is to reduce the induced resistance of the wing and to increase the Ca/Cw ratio and thus to reduce the resistance and the fuel consumption.

Generally speaking, winglets are rigid constructions at the end of the wings, comprising an aerodynamic profile that is positioned at three specified angles to the direction of airflow. The alignment of the winglets is designed for the longest flight phase, namely for cruising. Moreover, the maximum effect of the winglets is achieved during cruising. This means that winglets are designed for high Mach numbers Ma = 0.8 and approx. 10,000 m cruising altitude with corresponding air pressure, density and temperature. The flight phases of climbing flight, approach to landing, takeoff and landing are not taken into account in the above.

US 5,988,563 and US 2004/0000619 A1 each disclose a foldable winglet that can rotate in relation to the wing on an attachment axis and that during flight can be moved between a folded-in and a folded-out position.

Since the aerodynamic load on the winglets is above all extremely high at a large angle of yaw and during lateral gusts, the winglets must be designed so as to be enormously robust for these load cases. Due to the load introduction from the winglet to the wing element, the wing element must then also be designed so as to be correspondingly robust.

WO 03/00547 discloses that loads resulting from vertical manoeuvres can be reduced by local control surfaces on the winglet, in that by opening these control surfaces the aerodynamic load is reduced.

US 4 722 499 B describes auxiliary wing tips for an aircraft, wherein an aerodynamically formed boom is arranged adjacent to a wing element. On the other side of the boom two winglets are arranged, both of which are rotatable about two rotation axes, respectively. The rotation axis which leads the winglets during their fold-in or fold-out movement is arranged in parallel to the flight direction, wherein this direction forms 90° with the main direction of the extension of the wing element.

GB 2 282 996 A discloses an aircraft flight control system in which flight control output devices are controlled according to flight control input commands from the pilot. The flight control output devices are moveable with three degrees of freedom and are symmetrically arranged at the wingtips of each wing element. However, these flight control devices are exclusively provided in order to convert flight control input commands for controlling the aircraft. This provides the advantage that a rudder at the tail of the aircraft might be omitted.

EP 1 531 126 A1 describes a wing tip device in which a moveable wing tip is rotatable about a rotary axis relative to the wing element. The movement is dependent from a sensed load on the wing in order to avoid that the bending moment acting on the wing of the aircraft exceeds a certain limit.

### Summary of the invention

It may be desirable to have a winglet that can be adapted to the operating states of an aircraft.

According to an exemplary embodiment of the invention an adaption device for adapting aerodynamic characteristics of a wing element is created, wherein the adaption device comprises a winglet, wherein the winglet is movably attachable to the wing element, and wherein the winglet is rotatable in relation to the wing element such that an angle between an associated rotary axis and a main direction of extension of the wing element differs from 90°.

According to another exemplary embodiment of the invention a method for adapting aerodynamic characteristics of a wing element is provided, wherein a winglet attached to the wing element is rotated in relation to the wing element such that an angle between an associated rotary axis and a main direction of extension of the wing element differs from 90°.

According to yet another exemplary embodiment of the invention an aircraft with a device with the above-described characteristics is provided.

According to yet another exemplary embodiment of the invention a device with the above-described characteristics is used in an aircraft.

The spatial position and the movements or rotations of the winglet according to an exemplary embodiment of the invention can be defined by three angles of the aircraft's body coordinate system. The α_{F}-angle denotes the position of the winglet relative to the x_{F}-axis of the aircraft, which axis generally speaking extends along the longitudinal axis of the fuselage; the β_{F}-angle denotes the position of the winglet relative to the y_{F}-axis of the aircraft, which axis generally speaking extends in the direction of the wing tip and perpendicular to the x_{F}-axis; while the γ_{F}-angle denotes the position of the winglet relative to the z_{F}-axis, which generally speaking extends in a vertical plane perpendicular to the x_{F}-axis and the y_{F}-axis. For reasons of mathematical unambiguity a rotary sequence has to be determined, e.g. α_{F}, _{βF}, γ_{F}.

y_{F} thus extends from the left wing tip to the right wing tip and can therefore be designated the main axis of extension of the wing element.

The spatial position or the rotations of the winglet can also be described by a body coordinate system or by the Euler rotary angles (compare Brockhaus: Flugregelung, Springer-Verlag, Berlin, 1995).

In this arrangement with the angle Φ, rotation is first on the body's x-axis, as a result of which the y- and z-axes are moved to new spatial axes positions y₁ and z₁. For the purpose of consistent designation the axis x is renamed x₁. Subsequently, rotation at the angle θ on the new y₁-axis moves the axes x₁ and z₁ to new positions x₂ and z₂. The y₁-axis is renamed y₂. Finally, rotation by the angle Ψ takes place on the new z₂-axis. z, z₁, z₂ can concretely also be designated the upward axis, while Ψ can be designated the toe angle.

The definition of the body coordinate system is based on a rigid winglet that is attached to the wing element along an axis that extends on the end of the wing element that is located away from the fuselage or that extends within the wing element. This attachment axis may be selected as the body's x-axis. It describes the fold-in or fold-out movement of the winglet relative to the wing element or to the main axis of extension of the wing element. The z-axis then leads through the geometric centre of gravity of the winglet and extends so as to be perpendicular to the x-axis. The y-axis then extends perpendicular to the x-axis and z-axis so that a right-hand system is created. In the case of a plane rectangular wing with a plane rectangular winglet that is attached at a right angle, the x-axis and the z-axis are in the winglet plane while the y-axis is perpendicular to the winglet plane. In this special case the two coordinate systems x, y, z and x_{F}, y_{F}, z_{F} are identical.

With the device according to the invention, as a result of the flexible construction, above all as a result of the rotatability of the winglets additionally on the upward axis, the load cases to be dimensioned for the winglets and outer wings may be significantly reduced, in particular in the case of large angles of yaw, in the case of lateral gusts and manoeuvres (for example drastic yaw movements and rolling motion), and thus the winglet may be designed in an aerodynamically advantageous way. Depending on the angle of yaw the winglets may rotatably align themselves in relation to the fuselage axis, for example in the direction of the airflow or in the direction of flight, in a way that is similar to sails that are aligned to the direction of the wind. In this way the winglets may be designed so as to be significantly larger and at the same time, due to the reduced loads, both the winglet and the wing element may be designed so as to be lighter. The advantageous aerodynamic design in conjunction with the reduction in weight results in a particularly significant reduction in the fuel consumption and overall in great economy of the aircraft.

Furthermore, the flexible setting options of the winglet may make possible direct control of wing torsion. In addition to the option of influencing the bending of the wing by fold-in and fold-out winglets, there is now an option available, which option is in many cases much more important, of directly influencing wing torsion. In this way in every flight phase resistance may be minimised and as a result of this still further fuel consumption can be achieved, which represents one of the significant optimisation potentials in aircraft engineering.

As a result of the great flexibility and free movement option of the winglet, furthermore, optimal lift distribution may be achieved in each flight state. By folding-out or folding-in the winglet, by ideally setting the toe angle, and/or by rotating the winglet on the y₁-axis, in the approach to landing the coefficient of lift can be increased, and by folding the winglets in during cruising low aerodynamic resistance may be set. For cruising, the winglet may be set relative to the coordinate system of the aircraft, for example for α_{F} = 5°, for β_{F} = 15° and for γ_{F} = 4°.

According to another exemplary embodiment of the invention the winglet is rotatably attachable to an attachment axis with the wing element. In addition to controlling wing torsion this provides the option of additionally controlling bending of the wing and of adapting it to various aerodynamic load cases.

The winglet according to the invention may be rotatable in relation to the wing element on one, two or three rotary axes. This high degree of flexibility makes possible high-quality adaptation of the aerodynamic characteristics of the wing element or of the aircraft to the many various operating states such as the takeoff state, landing state, cruising state.

According to yet another exemplary embodiment of the invention the winglet can be rotatably attachable on the y₁-axis of the body coordinate system of the winglet. In particular in the case of two-sided winglets, which comprise identical or different surfaces above and below the wing, over 180°-rotation the bending moment that is introduced in the wing may be significantly reduced.

A winglet may thus be movably attachable to a wing element in a rotary manner such that said winglet can move by two or three degrees of freedom. Not only can it fold inward in the direction of the fuselage, but it also assumes an angle to the main direction of extension of the wing element, which angle essentially differs from 90°, and rotates on the y₁-axis of the body coordinate system of the winglet. In this way the winglet can better adapt to various operating states of an aircraft. By means of such adjustment of the winglets to reflect various load cases it is possible to create ideal aerodynamic conditions and at the same time to significantly reduce the aerodynamic loads on the winglets.

Furthermore, the various rotary options of the winglet are used to influence the wake turbulence characteristics of the aircraft.

According to a further exemplary embodiment the device comprises an aerodynamic fairing element between the wing element and the winglet in order to cover any gap between the wing element and the winglet, which gap may be aerodynamically unfavourable. In this way aerodynamic losses can be avoided.

According to a further exemplary embodiment the device comprises at least one suspension element by means of which the winglet is attached to the wing element.

According to a further exemplary embodiment at least one suspension element is controllably provided so that the winglet can rotate within various degrees of freedom. In order to provide the suspension element so that it is controllably movable, according to another exemplary embodiment at least one suspension element is moved by a driven spindle, for example with the use of an electric motor.

According to another exemplary embodiment the device further comprises a drive device for moving the winglet and/or the suspension element. In this arrangement the drive device can comprise electric, hydraulic and/or piezoelectric drives. Furthermore, active materials, in particular piezoceramics, can be used.

According to another exemplary embodiment of the device the winglet is divided into an upper and a lower part, with the upper and/or the lower part of the winglet being movable. In this arrangement the upper or the lower part can be designed so as to slightly, or significantly, project outward. The same applies to the inclination in the direction of the fuselage axis. For example, in a winglet that extends above and below the wing element, only the top surface or only the bottom surface may be movable.

According to another exemplary embodiment the winglet is in three parts, with an upper, a lower and an outer part, wherein at least one part is movable. According to a further exemplary embodiment each of these parts in turn can be divided into several sub-parts, and each sub-part itself can be movable. According to a further exemplary embodiment furthermore, in addition to the winglet, also a part of the wing element or an entire wing element including the winglet can be rotatable.

According to another exemplary embodiment of the method rotation of the winglet is controlled by an onboard computer unit. In this arrangement the onboard computer unit controls the winglet on the basis of measured aircraft data such as for example flight altitude, direction of airflow, angle of incidence, air pressure, temperature, etc.

According to another exemplary embodiment of the method the onboard computer unit can regulate the movement of a winglet by way of a regulating unit. The onboard computer unit or the regulating unit for example reacts to any change in various parameters and automatically sets the winglets accordingly. Regulation can be uniform or adaptive in relation to individual aircraft data. In addition, a particular operating state (such as for example takeoff state, landing state, cruising state) can be used as a criterion for adjusting the position of the winglet.

According to a further exemplary embodiment of the method, the winglet controls any wing torsion and/or wing bending so that the wing profile can be aerodynamically optimised.

According to yet another exemplary embodiment which is not claimed, a wind power engine or a windmill with a device featuring the above-described characteristics is created.

The embodiments relating to the device also apply to the method and to the aircraft as well as to the use, and vice versa.

With the device and the method according to the invention an effective setting option of the winglets that reflect any operating states of an aircraft may thus be achievable, as a result of which the aerodynamic resistance and the weight-determining loads on the winglets and the wing elements may be reduced. Consequently the winglets, the wings and the transition from the wing to the fuselage may be designed so as to save more weight and so that the fuel consumption may be greatly reduced. In this way the aircraft's economy may be significantly improved.

### Brief description of the drawings

Below, for further explanation and for an improved understanding of the present invention, exemplary embodiments are described with reference to the enclosed drawings. The following are shown:
- Fig. 1: a diagrammatic view of a wing element with a movably attached winglet according to one exemplary embodiment of the invention;
- Fig. 2: a further diagrammatic view of a wing element with a movably attached winglet and its rotary axes according to an exemplary embodiment of the invention;
- Fig. 3: a further diagrammatic view of a wing element with a movably attached winglet in various positions according to one exemplary embodiment of the invention;
- Fig. 4: a diagrammatic view of a suspension element according to one exemplary embodiment of the invention;
- Fig. 5: a diagrammatic view of a controllable suspension element according to one exemplary embodiment of the invention;
- Fig. 6: a diagram showing the achieved reduction in the gradient of the bending moments along the winglet with a change in the toe angle of 4 degrees;
- Fig. 7: a diagram of the achieved reduction in the gradient of the bending moments along the wing, resulting from the change in the toe angle of the winglet;
- Fig. 8a: a diagrammatic view of a rotatable winglet comprising two parts;
- Fig. 8b: a further diagrammatic view of a rotatable winglet comprising three parts;
- Fig. 8c: a further diagrammatic view of a rotatable winglet comprising three parts, one part of which is rotatable.

### Detailed description of exemplary embodiments

Identical or similar components in different figures have the same reference characters.

The illustrations in the figures are diagrammatic and not to scale.

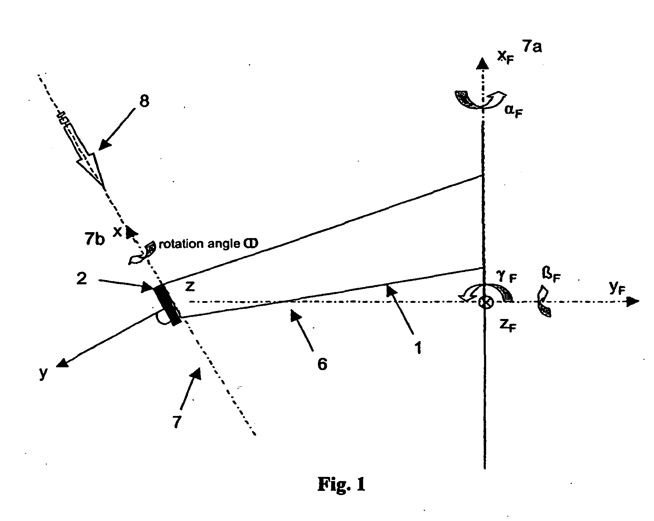

**Fig. 1** shows a diagrammatic top view of a winglet 2 and of a wing element 1 as well as the aircraft's body coordinate system 7a and the winglet's body coordinate system 7b. Furthermore, the main axis of extension 6 of the wing element 1 and a rotary axis 7 of the winglet with the rotary angle Φ is shown. This is the first rotary axis 7 according to the convention of the Euler angles. By rotation on the x-axis the winglet 2 can be folded out or folded in. The arrow 8 indicates the direction of the local airflow during flight with a local angle of yaw at the winglet. For example, if the winglet is not to be rotated by the Euler angles Φ and θ, then the axes x, x₁ and x₂ are identical; likewise y, y₁ and y₂ and z, z₁ and z₂. Rotation on the z-axis in the direction of the local airflow then directly results in a reduction in the aerodynamic load and thus in a reduction in the overall load on the winglet.

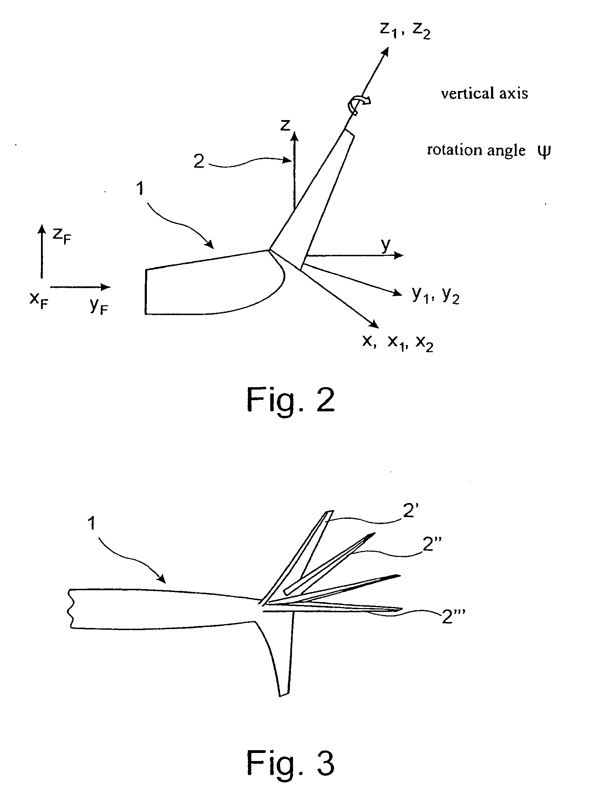

**Fig. 2** shows a device for adapting a winglet to an operating state of an aircraft, according to one exemplary embodiment of the invention. Furthermore, a body coordinate system of the winglet is introduced in order to define the rotary axes. By rotation on the x-axis at a rotary angle Φ the winglet has been brought from the perpendicular position to the new flap position. In this way the body coordinate system moves to the new axes x₁, y₁, z₁.

Rotation on the z₂-axis or on the y₁-axis makes it possible to freely select settings required by various flight states or various aerodynamic load cases.

For the sake of clarity and obviousness the drawing does not show rotation on the y₁-axis so that x₁ = x₂, y₁ = y₂, z₁ = z₂. Only rotation on the z₂-axis on the toe angle Ψ is illustrated. Illustration of the rotation on the y₁- and the z₂-axis is also obvious on the basis of Figs. 1 and 2.

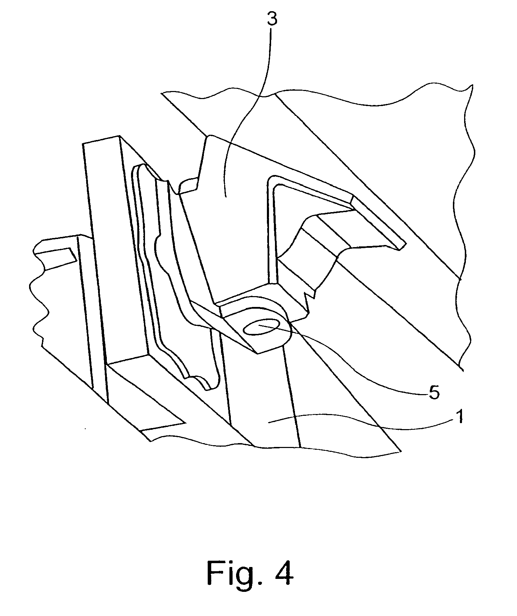

The device comprises a wing element 1, a winglet 2 and at least one suspension element 3 (see Fig. 4). The winglet 2 is attached to the wing element 1 by way of a suspension element 3. The device according to Fig. 1 shows the way the winglet can rotate on three (spatial) axes. In this way the winglet 2 can be adapted to the local angle of yaw of the flight state. Adaptation of the toe angle (rotation on the z₂-axis of the body coordinate system) and rotation on the y₁-axis makes it possible to change (in particular to reduce) the effective surface of the winglet 2 (in the angle-of-yaw flight, during drastic roll and yaw and also during combined roll and yaw), which effective surface is impinged upon by the lateral component of the airflow so that in particular the resulting transverse forces and bending moments on the winglet 2 and thus also on the outer wing 1 are reduced. By changing the toe angle, the rotation on the y₁-axis, and by folding-in or folding-out the winglet on the x-axis, the surface of the winglet 2, which surface is aerodynamically effective in the direction of flight, changes.

**Fig. 3** shows the movement of the winglet on the x-axis or on the attachment axis. It becomes possible, together with the settability of the toe angle, to optimally set the lift characteristics to any given flight phase. During cruising, i.e. at high altitude and at high speed, the winglet 2' can be folded-in in order to reduce the resistance in this way. Depending on aerodynamic conditions and flight phases, i.e. during side slipping, during climbing, descent or in strong side winds, the winglet 2" can assume corresponding intermediate positions. At low speed, in particular during the approach to landing, where a large coefficient of lift may be desired, the winglet 2"' can be folded out so as to increase the wing surface.

**Fig. 4** shows one option of attaching the winglet 2 to a wing element 1. The suspension element 3 shown, of which there is at least one, connects the wing element 1 to the winglet 2. By way of a rotary axis 5, for example the toe angle can be set in a targeted way to the respective load cases. At the same time the suspension element 3 can be attached so as to be articulated so that the winglet 2 can additionally rotate on an attachment axis (x-axis of the body coordinate system of the winglet) and on the y₁-axis. Rotation on the attachment axis makes it possible for the winglet to fold in and out in relation to the aircraft fuselage, as is shown in the front view of the wing-winglet combination in Fig. 2.

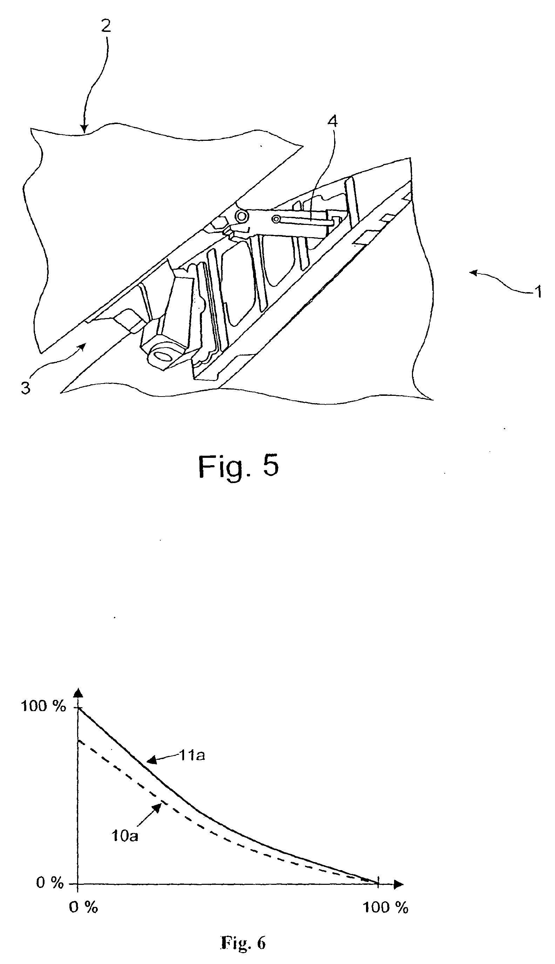

**Fig. 5** shows one option of controlling the winglet 2. In this arrangement, rotating the winglet 2 on the upward axis 5, on the y-axis and on the x-axis, can be achieved by a drive motor that retracts and extends a spindle 4 in a targeted manner. Thus, for example, the winglet 2 rotates on its upward axis 5. Rotation of the winglet 2 on its attachment axis and on the y₁-axis can be made possible by a driven articulated suspension element 3.

**Fig. 6** shows the gradient 10a, 11a of the bending moments in the main direction of extension of a rectangular winglet with a change 10a and without a change 11a in the toe angle of 4°. The abscissa shows the position zₚ on the winglet in relation to the winglet length l_{w} from the transition of the winglet to the wing right up to the winglet tip in %, while the ordinate shows the amount of the bending moment in % in relation to the respective position zₚ/l_{w}. For an angle of yaw manoeuvre according to the European airworthiness requirement JAR25, a change in the toe angle of 4° results in a significant reduction in the gradient of the bending moments. This results in a correspondingly significant reduction in the structural weight of the winglet.

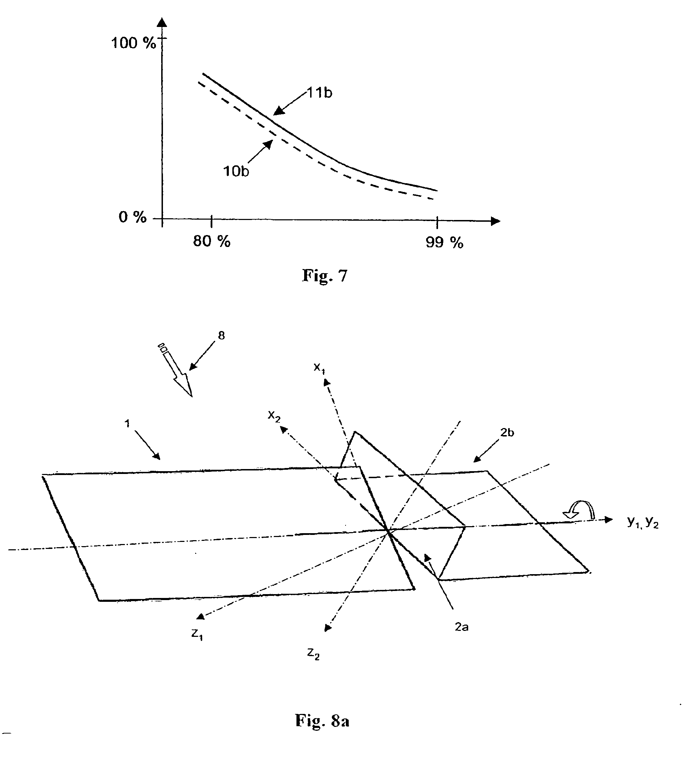

**Fig. 7** in respect of the JAR25 angle of yaw manoeuvre shows the gradient of the bending moments in the main direction of extension in the outer region of a wing element with which a winglet with 10b and without 11b toe angle change of 4° is connected. The abscissa shows the position y_{F}, ₚ on the wing in relation to the length l_{F} of the wing in the outer region right up to the transition to the winglet in %, while the ordinate shows the amount of the bending moment in %. It becomes clear that the change in the toe angle may also significantly reduce the wing load.

**Fig. 8a** shows a further embodiment in which the winglet comprises an upward-oriented part (2a) and an outward-oriented part (2b). For the sake of clarity only rotation on the y₁-axis is shown. Consequently the body coordinate system x₁, y₁, z₁ is moved to the new coordinate system x₂, y₂, z₂. In the case of significant angles of incidence of the wing element 1 corresponding to the local direction 8, rotation on the y₁-axis results in a significant reduction of the bending moments on the winglet and on the wing. The upper part may ensure that no gap is formed towards the front during rotation on the y₁-axis.

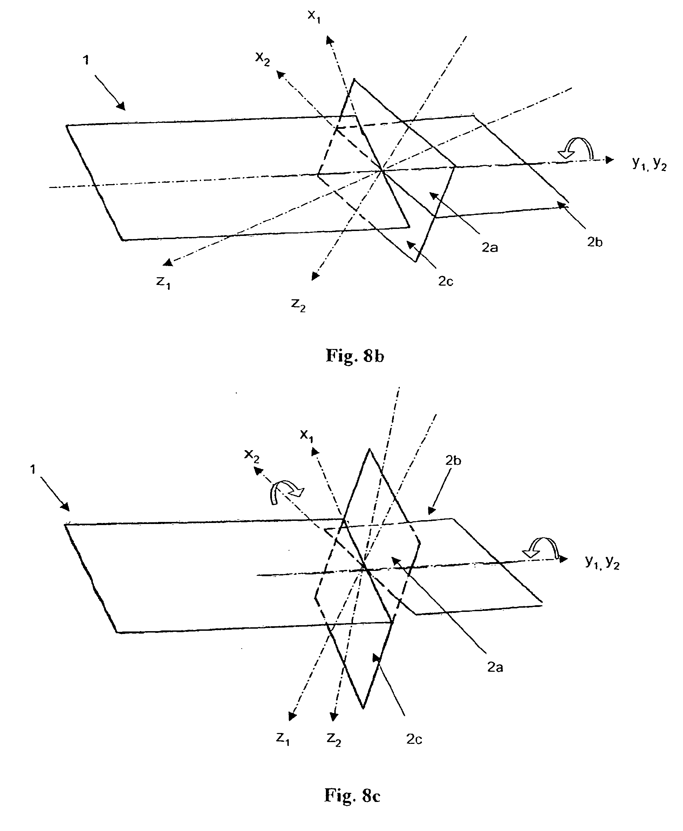

**Fig. 8b and 8c** shows 3-part winglet designs. When compared to Fig. 8a the upper part 2a continues downward 2c. In this way during rotation on the y₁-axis, both on the front and on the rear wing-to-winglet transition, the formation of a gap can be prevented. In Fig. 8b the upper part 2a and the lower part 2c rotate together with the outer part 2b. In Fig. 8c only the outer winglet part 2b rotates.

The winglet-to-wing transition, the angle between the upper and the outer winglet part, as well as the geometric design of the winglet parts (curvature, profile thickness, sweep, etc...) can be selected such that, taking into account all the flight phases, optimal aerodynamic characteristics and load characteristics and thus minimal fuel consumption and optimal economy can be achieved.

To this effect the winglet may be provided with additional rotary options. Furthermore, the winglet may be supplemented by further rotatable parts.

In practical application the rotary movements may at all times be carried out simultaneously rather than in sequence.

In this arrangement the toe angle, the flap position of the winglet 2 relative to the fuselage, and/or rotation on the y₁-axis can be controlled by an onboard computer on the basis of the measured flight state data such as, for example, flight altitude, yaw angle, angle of incidence, roll angle, flight speed, angle of yaw, etc. For example, it may thus be possible to automatically react to any critical aerodynamic load, and the effective aerodynamic surface of the winglet may be reduced.

In addition it should be pointed out that "comprising" does not exclude other elements or steps, and "a" or "one" does not exclude a plural number. Furthermore, it should be pointed out that characteristics or steps which have been described with reference to one of the above embodiments can also be used in combination with other characteristics or steps of other embodiments described above, the scope of protection only being defined by the wording of the claims. Reference characters in the claims are not to be interpreted as limitations.

## Claims

1. An adaption device for adapting aerodynamic characteristics of a wing element (1),
wherein the adaption device comprises:
a wing element (1) attachable to a fuselage;
a winglet (2), and
an onboard computer with a regulating unit,
wherein the winglet (2) is movably attached to the wing element (1),
wherein the winglet (2) is rotatable in relation to the wing element (1) such that an angle between an associated rotary axis (7) for a fold-in or fold-out movement of the winglet (2) and a main direction of extension (6) of the wing element (1), which is a direction perpendicular to a longitudinal direction of the fuselage, differs from 90°;
wherein the winglet (2) is further rotatable in relation to the wing element (1) about a second axis which is perpendicular to the rotary axis (7), and
wherein the regulating unit is adapted for regulating a rotation of the winglet (2) dependent of measured aircraft parameters and flight parameters.

2. The device of claim 1, wherein the winglet (2) is, together with the wing element (7), rotatably attachable on an attachment axis (7).

3. The device of claim 1 or 2, wherein the winglet (2) is rotatable in relation to the wing element (1) on a third rotary axis which is perpendicular to the rotary axis (7) and the second axis.

4. The device of any one of claims 1 to 3, further comprising a wing element (1).

5. The device of one of the preceding claims, further comprising an aerodynamic fairing element between the wing element (1) and the winglet (2) and/or winglet parts (2a, 2b, 2c).

6. The device of one of the preceding claims, further comprising at least one suspension element (3) for attaching the winglet (2) to the wing element (1).

7. The device of claim 6, wherein the at least one suspension element (3) is controllably movable.

8. The device of claim 6 or 7, wherein the at least one suspension element (3) is movable by means of a driven spindle (4).

9. The device of one of the preceding claims, further comprising a drive device for moving the winglet (2).

10. The device of claim 9, wherein the drive device is selected from the group consisting of electric, hydraulic, piezoelectric drives and active materials, in particular piezoceramics.

11. The device of one of the preceding claims, wherein the winglet is divided into an upper (2a) and a lower (2c) part with reference to the wing element (1), wherein at least one of the upper (2a) and the lower (2b) part of the winglet being movable.

12. The device of one of the preceding claims, wherein the winglet (2) comprises an upper (2a), lower (2c) and outer (2b) part with reference to the wing element (1), wherein at least one part (2, 2a, 2b, 2c) is designed so as to be movable.

13. The device of claim 11 or 12, wherein at least one part (2, 2a, 2b, 2c) is divided into several sub-parts, and at least one sub-part is designed so as to be movable.

14. The device of one of the preceding claims, wherein in addition to the winglet (2, 2a, 2b, 2c) a part of the wing element (1) or an entire wing element (1), including the winglet (2, 2a, 2b, 2c), is adapted for being rotatable.

15. A method for adapting aerodynamic characteristics of a wing element (1) attachable to a fuselage, wherein
the winglet (2) that is attached to the wing element (1) is rotated with a fold-in or fold-out movement in relation to the wing element (1) such that an angle between an associated rotary axis (7) and a main direction of extension (6) of the wing element (1), which is a direction perpendicular to a longitudinal direction of the fuselage, differs from 90°;
the winglet (2) is further rotated in relation to the wing element (1) about a second axis which is perpendicular to the rotary axis (7), and
said rotations are dependent of measured aircraft parameters and flight parameters.

16. The method of claim 15, wherein rotation of the winglet (2, 2a, 2b, 2c) is controlled by an onboard computer unit, in particular on the basis of measured aircraft data.

17. The method of claim 16, wherein the onboard computer unit comprises a regulating unit adapted for regulating a rotation of the winglet (2, 2a, 2b, 2c).

18. The method of one of claims 15 to 17, wherein by means of the winglet (2, 2a, 2b, 2c) a wing torsion is controlled.

19. The method of one of claims 16 to 18, wherein by means of the winglet (2, 2a, 2b, 2c) a wing bending is controlled.

20. An aircraft, comprising an adaption device according to one of claims 1 to 14.

21. The use of an adaption device according to one of claims 1 to 14 in an aircraft.

## Patentansprüche

1. Eine Anpassungsvorrichtung zum Anpassen aerodynamischer Eigenschaften eines Flügelelements (1), wobei die Anpassungsvorrichtung umfasst:
ein Flügelelement (1), welches an einen Rumpf anbringbar ist;
ein Winglet (2), und
einen Bordcomputer mit einer Regeleinheit,
wobei das Winglet (2) an dem Flügelelement (1) beweglich befestigt ist,
wobei das Winglet (2) gegenüber dem Flügelelement (1) so drehbar ist, dass ein Winkel zwischen einer zugehörigen Drehachse (7) für eine Einklapp- oder Ausklappbewegung des Winglets (2) und einer Haupterstreckungsrichtung (6) des Flügelelements (1), welche die Richtung senkrecht zu einer Längsrichtung des Rumpfs ist, sich von 90° unterscheidet;
wobei das Winglet (2) des Weiteren gegenüber dem Flügelelement (1) um eine zweite Achse drehbar ist, welche senkrecht zur Drehachse (7) ist, und
wobei die Regelungseinheit angepasst ist, die Drehung des Winglets (2) abhängig von gemessenen Flugzeugparametem und Flugparametern zu regeln.

2. Die Vorrichtung nach Anspruch 1, wobei das Winglet (2) zusammen mit dem Flügelelement (7) drehbar an der Befestigungsachse (7) anbringbar ist.

3. Die Vorrichtung nach Anspruch 1 oder 2, wobei das Winglet (2) gegenüber dem Flügelelement (1) an einer dritten Drehachse drehbar ist, die senkrecht zu der Drehachse (7) und der zweiten Achse ist.

4. Die Vorrichtung nach einem der Ansprüche 1 bis 3, ferner aufweisend ein Flügelelement (1).

5. Die Vorrichtung nach einem der vorhergehenden Ansprüche, ferner umfassend ein aerodynamisches Verkleidungselement zwischen dem Flügelelement (1) und dem Winglet (2) und/oder Wingletteilen (2a, 2b, 2c).

6. Die Vorrichtung nach einem der vorhergehenden Ansprüche, ferner umfassend mindestens ein Aufhängungselement (3) zum Befestigen des Winglets (2) mit dem Flügelelement (1).

7. Die Vorrichtung nach Anspruch 6, wobei das mindestens eine Aufhängungselement (3) steuerbar bewegbar ist.

8. Die Vorrichtung nach Anspruch 6 oder 7, wobei das mindestens eine Aufhängungselement (3) mittels einer angetriebenen Spindel (4) bewegbar ist.

9. Die Vorrichtung nach einem der vorhergehenden Ansprüche, ferner umfassend eine Antriebseinrichtung zum Bewegen des Winglets (2).

10. Die Vorrichtung nach Anspruch 9, wobei die Antriebseinrichtung ausgewählt ist aus der Gruppe bestehend aus elektrischen, hydraulischen, piezoelektrischen Antrieben und aktiven Materialien, insbesondere Piezokeramik.

11. Vorrichtung nach einem der vorhergehenden Ansprüche, wobei das Winglet bezüglich des Flügelelements (1) in einen oberen (2a) und unteren Teil (2c) geteilt ist, wobei zumindest der obere (2a) oder der untere (2b) Teil des Winglets beweglich ist.

12. Die Vorrichtung nach einem der vorhergehenden Ansprüche, wobei das Winglet (2) mit einem oberen (2a), unteren (2c) und äußeren (2b) Teil bezüglich des Flügelelements (1) ausgebildet ist, wobei mindestens ein Teil (2, 2a, 2b, 2c) bewegbar ausgeführt ist.

13. Die Vorrichtung nach Anspruch 11 oder 12, wobei mindestens ein Teil (2, 2a, 2b, 2c) in mehrere Unterteile geteilt ist und mindestens ein Unterteil beweglich ausgeführt ist.

14. Die Vorrichtung nach einem der vorhergehenden Ansprüche, wobei zusätzlich zum Winglet (2, 2a, 2b, 2c) ein Teil des Flügelelements (1) oder ein ganzes Flügelelement (1) mit dem Winglet (2, 2a, 2b, 2c) drehbar ausgeführt ist.

15. Ein Verfahren zum Anpassen aerodynamischer Eigenschaften eines Flügelelements (1), welches an einen Rumpf anbringbar ist, wobei
das an dem Flügelelement (1) angebrachte Winglet (2) gegenüber dem Flügelelement (1) mit einer Einklapp- oder Ausklappbewegung so gedreht wird, dass ein Winkel zwischen einer zugehörigen Drehachse (7) und einer Haupterstreckungsrichtung (6) des Flügelelements (1), welche eine Richtung senkrecht zu einer Längsrichtung des Rumpfs ist, sich von 90° unterscheidet;
das Winglet (2) ferner gegenüber dem Flügelelement (1) um eine zweite Achse gedreht wird, die senkrecht zur Drehachse (7) ist, und
die Drehungen von gemessenen Flugzeugparametern und Flugparametern abhängig sind.

16. Das Verfahren nach Anspruch 15, wobei die Drehung des Winglets (2, 2a, 2b, 2c) durch eine Bordcomputereinheit, insbesondere auf der Basis gemessener Flugzeugdaten, gesteuert wird.

17. Das Verfahren nach Anspruch 16, wobei die Bordcomputereinheit eine Regeleinheit aufweist, die angepasst ist, eine Drehung des Winglets (2, 2a, 2b, 2c) zu regeln.

18. Das Verfahren nach einem der Ansprüche 15 bis 17, wobei mittels des Winglets (2, 2a, 2b, 2c) eine Flügelverwindung gesteuert wird.

19. Das Verfahren nach einem der Ansprüche 16 bis 18, wobei mittels des Winglets (2, 2a, 2b, 2c) eine Flügelbiegung gesteuert wird.

20. Ein Flugzeug, umfassend eine Anpassungsvorrichtung gemäß einem der Ansprüche 1 bis 14.

21. Die Verwendung einer Anpassungsvorrichtung gemäß einem der Ansprüche 1 bis 14 in einem Flugzeug.

## Revendications

1. Dispositif d'adaptation pour adapter des caractéristiques aérodynamiques d'un élément d'aile (1), dans lequel le dispositif d'adaptation comporte :
un élément d'aile (1) pouvant être fixé à un fuselage,
une ailette verticale (2), et
un ordinateur embarqué ayant une unité de régulation,
dans lequel l'ailette verticale (2) est fixée de manière mobile à l'élément d'aile (1),
dans lequel l'ailette verticale (2) peut pivoter en relation avec l'élément d'aile (1) de sorte qu'un angle entre un axe de rotation associé (7) pour un mouvement de repliage ou dépliage de l'ailette verticale (2) et une direction principale d'extension (6) de l'élément d'aile (1), laquelle est une direction perpendiculaire à une direction longitudinale du fuselage, diffère de 90 °,
dans lequel l'ailette verticale (2) peut en outre pivoter en relation avec l'élément d'aile (1) autour d'un deuxième axe qui est perpendiculaire à l'axe de rotation (7), et
dans lequel l'unité de régulation est adaptée pour réguler une rotation de l'ailette verticale (2) en fonction des paramètres d'avion et des paramètres de vol mesurés.

2. Dispositif selon la revendication 1, dans lequel l'ailette verticale (2) est, conjointement avec l'élément d'aile (1), fixable par rotation sur un axe de fixation (7).

3. Dispositif selon la revendication 1 ou 2, dans lequel l'ailette verticale (2) peut pivoter en relation avec l'élément d'aile (1) sur un troisième axe de rotation, lequel est perpendiculaire à l'axe de rotation (7) et au deuxième axe.

4. Dispositif selon l'une quelconque des revendications 1 à 3, comportant en outre un élément d'aile (1).

5. Dispositif selon l'une des revendications précédentes, comportant en outre un élément de carénage aérodynamique entre l'élément d'aile (1) et l'ailette verticale (2) et/ou des composants d'ailette verticale (2a, 2b, 2c).

6. Dispositif selon l'une des revendications précédentes, comportant en outre au moins un élément de suspension (3) pour fixer l'ailette verticale (2) à l'élément d'aile (1).

7. Dispositif selon la revendication 6, dans lequel le au moins un élément de suspension (3) est mobile d'une manière commandée.

8. Dispositif selon la revendication 6 ou 7, dans lequel le au moins un élément de suspension (3) est mobile par l'intermédiaire d'une tige entraînée (4).

9. Dispositif selon l'une des revendications précédentes, comportant en outre un dispositif d'entraînement pour déplacer l'ailette verticale (2).

10. Dispositif selon la revendication 9, dans lequel le dispositif d'entraînement est sélectionné parmi le groupe constitué d'entraîneurs électriques, hydrauliques, piézoélectriques et de matériaux actifs, en particulier des piézocéramiques.

11. Dispositif selon l'une des revendications précédentes, dans lequel l'ailette verticale est divisée en une partie supérieure (2a) et une partie inférieure (2c) en référence à l'élément d'aile (1), dans lequel au moins l'une de la partie supérieure (2a) et de la partie inférieure (2c) de l'ailette verticale est mobile.

12. Dispositif selon l'une des revendications précédentes, dans lequel l'ailette verticale (2) comporte une partie supérieure (2a), une partie inférieure (2c) et une partie extérieure (2b) en référence à l'élément d'aile (1), dans lequel au moins une partie (2, 2a, 2b, 2c) est conçue de manière à être mobile.

13. Dispositif selon la revendication 11 ou 12, dans lequel au moins une partie (2, 2a, 2b, 2c) est divisée en plusieurs sous-parties, et au moins une sous-partie est conçue de manière à être mobile.

14. Dispositif selon l'une des revendications précédentes, dans lequel en plus de l'ailette verticale (2, 2a, 2b, 2c), une partie de l'élément d'aile (1) ou un élément d'aile entier (1), incluant l'ailette verticale (2, 2a, 2b, 2c), est adapté pour pouvoir pivoter.

15. Procédé pour adapter des caractéristiques aérodynamiques d'un élément d'aile (1) pouvant être fixé à un fuselage, dans lequel
l'ailette verticale (2) qui est fixée à l'élément d'aile (1) pivote avec un mouvement de repliage ou de dépliage en relation avec l'élément d'aile (1) de sorte qu'un angle entre un axe de rotation associé (7) et une direction principale d'extension (6) de l'élément d'aile (1), laquelle est une direction perpendiculaire à une direction longitudinale du fuselage, diffère de 90°,
l'ailette verticale (2) peut en outre pivoter en relation avec l'élément d'aile (1) autour d'un deuxième axe qui est perpendiculaire à l'axe de rotation (7), et
lesdites rotations dépendent des paramètres d'avion et des paramètres de vol mesurés.

16. Procédé selon la revendication 15, dans lequel la rotation de l'ailette verticale (2, 2a, 2b, 2c) est commandée par une unité informatique embarquée, en particulier sur la base des données d'avion mesurées.

17. Procédé selon la revendication 16, dans lequel l'unité informatique embarquée comporte une unité de régulation adaptée pour réguler une rotation de l'ailette verticale (2, 2a, 2b, 2c).

18. Procédé selon l'une des revendications 15 à 17, dans lequel, par l'intermédiaire de l'ailette verticale (2, 2a, 2b, 2c), une torsion d'aile est commandée.

19. Procédé selon l'une des revendications 16 à 18, dans lequel, par l'intermédiaire de l'ailette verticale (2, 2a, 2b, 2c), une flexion d'aile est commandée.

20. Avion comportant un dispositif d'adaptation conformément à l'une des revendications 1 à 14.

21. Utilisation d'un dispositif d'adaptation conformément à l'une des revendications 1 à 14 dans un avion.
